# EUROPEAN PATENT SPECIFICATION

(11) **EP 3 471 886 B1**
(45) Date of publication and mention of the grant of the patent: **24.02.2021**
(21) Application number: 16730360.1
(22) Date of filing: 16.06.2016
(51) Int. Cl.: B02C 13/14, B02C 13/26

(54) **VSI CRUSHER BEARING CARTRIDGE**
LAGERPATRONE FÜR VSI-BRECHER
CARTOUCHE DE PALIER DE CONCASSEUR VSI

(43) Date of publication of application: 24.04.2019
(73) Proprietor: Sandvik Intellectual Property AB, 811 81 Sandviken (SE)
(72) Inventor: FORSBERG, Andreas, 217 52 Malmö (SE); KJAERRAN, Knut, 233 91 Svedala (SE); DALLIMORE, Rowan, Bath Bath and North East Somerset BA2 8SP (GB)
(74) Representative: Sandvik
(86) International application number: PCT/EP2016/063895
(87) International publication number: WO 2017/215754

(56) References cited:
- EP-A2- 0 562 194
- EP-A2- 1 287 893
- CN-A- 104 722 357
- CN-B- 103 657 793
- DE-A1- 2 650 906
- DE-U1- 20 211 899
- US-A- 3 652 022
- US-A- 3 955 767
- US-A- 4 061 279

## Description

### Field of invention

The present invention relates to a bearing cartridge to support a rotatable main shaft of a vertical shaft impact (VSI) crusher and in particular, although not exclusively, to a retaining ring forming part of the bearing cartridge to support mounting of the cartridge within the crusher.

### Background art

Vertical shaft impact (VSI) crushers find widespread use for crushing a variety of hard materials, such as rock, ore, demolished constructional materials and the like. Typically, a VSI crusher comprises a housing that accommodates a rotor mounted at a generally vertically extending main shaft. The rotor is provided with a top aperture through which material to be crushed is fed under gravity from an elevated position. The centrifugal forces of the spinning rotor eject the material against a wall of anvils and/or retained compacted material such that on impact with the anvils/compacted material bed the feed material is crushed to a desired size.

The rotor commonly comprises a horizontal upper disc and a horizontal lower disc. The upper and lower discs are connected and separated axially by a plurality of upstanding rotor wall sections. The top aperture is formed within the upper disc such that the material flows downwardly towards the lower disc between the wall sections and is then ejected at high speed towards the anvils/compacted material bed. A replaceable distributor plate is mounted centrally on the lower disc and acts to protect it from the material feed. Example VSI crushers are described in WO 01/30501, US 2011/0024539, US 6,171,713, EP 1287893, US 4,061,279 CN 104722357 and CN 103657739.

Conventionally, the main shaft that supports and provides rotational drive to the rotor is mounted within the crusher via a bearing cartridge. The cartridge houses internal roller and thrust bearings to guide and stabilize the rotating main shaft. The bearing cartridge is typically mounted at a drum forming a part of the frame of the crusher and in particular is supported at an axial ends of the drum via an upper annular neck and lower annular skirt. The cartridge is rotationally locked to the drum and hence the crusher frame via an upper flange bolted to the annular neck and a lower retaining ring bolted to the annular skirt. Conventionally, the retaining ring is formed by two tapered steel rings having opposed wedging surfaces fitted back-to-back about the main shaft. As one of the wedges is clamped against the skirt by the bolts, the opposite wedge is forced against the outside surface of the bearing cartridge to rotationally lock the cartridge within the drum. However, such conventional arrangements are disadvantageous for a number of reasons. In particular, over tightening of the retaining ring bolts forces the ring radially inward against the cartridge to an extent that the running clearance of the internal bearings is reduced. Additionally, existing retaining rings typically seize at the cartridge and/or the skirt making maintenance of the lower drive components of the crusher difficult. Furthermore, conventional bearing cartridges are difficult and inconvenient to install and remove at the crusher frame given the restricted access at the lower internal region of the crusher. The installation of a multi-component retaining ring is often problematic and increases the operational downtime of the crusher. Accordingly, what is required is a bearing cartridge and a retaining ring that addresses these problems.

### Summary of the Invention

It is an objective of the present invention to provide a bearing cartridge for a vertical shaft impact (VSI) crusher having a retaining or support ring that eliminates the risk and occurrence of unintentionally reducing an internal running clearance of bearings of the cartridge that support the main shaft. It is a further specific objective to provide a bearing cartridge having component parts and including in particular a retaining or support ring to mount the cartridge at the crusher frame that reduces or eliminates the risk of the bearing cartridge and its component parts seizing to one another and/or the support frame so as to greatly facilitate insulation, servicing and removal of the bearing cartridge at the crusher.

It is a yet further specific objective to provide a retaining ring for a bearing cartridge configured to lock in position via a predetermined locking force so as to eliminate damage or undesirable change to other components of the bearing assembly and crusher that may reduce the operating performance and efficiency of the crusher. It is a further specific objective to provide a retaining ring for a bearing cartridge configured to withstand high operating temperatures without undesirable expansion and detrimental thermal transfer characteristics. It is a general objective of the present invention to reduce the overall weight of the crusher as far as possible without compromising the integrity and operational lifetime of the crusher.

The objectives are achieved by providing a bearing cartridge to support a rotatable main shaft of a VSI crusher that comprises a single piece retaining ring to support mounting of the cartridge within the crusher and to stabilise the cartridge during dynamic rotation of the main shaft. The subject invention is advantageous via the single piece retaining ring to specifically eliminate the risk and occurrence of undesirable reduction of the running clearance of the bearings. In particular, the present retaining ring is configured specifically so as to be incapable of being forced radially inward onto a main housing of the bearing cartridge that would otherwise distort the housing radially inward and accordingly reduce the running clearance of the internal thrust and/or roller bearings. In particular, the inventors have identified that mounting and axially and rotationally locking the cartridge at the crusher mainframe (i.e., drum) at an upper axial region is sufficient such that the axially lower retaining ring functions to laterally stabilise the bearing cartridge within the drum. That is, the present retaining ring is not configured to rotationally clamp onto the outside surface of the bearing housing to any significant extent so as to be rotationally locked to the housing according to the conventional multi-component wedge retaining rings. The present mounting arrangement is advantageous to eliminate transmission of vibrational forces from the rotating main shaft to the crusher frame which in turn reduces operating noise, component wear and accordingly increases the strength of mounting of the bearing cartridge within the crusher.

According to a first aspect of the present invention there is provided a bearing cartridge to support a rotatable main shaft of a vertical shaft impact (VSI) crusher, the cartridge comprising: an elongate housing defining an internal chamber to receive a part of the main shaft of the crusher; an annular flange projecting radially outward from the housing at or towards a first axial end of the housing to seat within an annular neck of a frame part of the crusher; and a retaining ring releasably mountable to an external facing surface of the housing at or towards a second axial end of the housing to seat within an annular skirt of the frame part; characterised in that: the retaining ring is a single piece ring extending radially between the skirt and the housing.

Preferably, an external facing surface of the ring is in contact with a radially inward facing surface of the skirt and a radially inward facing surface of the ring is in contact with the external facing surface of the housing such that the ring extends completely between the skirt and the housing. Advantageously, the present ring is not split or divided in a radial direction but is formed as a single body extending radially continuously between the internal facing surface of the skirt and the external facing surface of the housing. The present ring comprises a material having a desired rigidity and malleability so as to not expand radially when placed under axial compression by attachment bolts. That is, the present ring is capable of being deformed to a slight degree in the radial direction so as to increase the frictional contact of the ring with the radially adjacent skirt (at the external facing surface) and housing (at the internal facing surface). Importantly, the present ring by its single-piece construction is not configured to be compressed radially onto the housing that would otherwise reduce the internal diameter of the housing and accordingly the running clearance of the internal bearings.

Preferably, the ring comprises bolt bores extending axially through the ring to receive bolts to releasably secure the ring to the skirt. Preferably, the ring comprises six to eight bores distributed uniformly in a circumferential direction around the ring. Preferably, the ring further comprises at least one axially extending pilot bore being separate to the bolt bores to receive axially a release screw or bolt. More preferably, the ring comprises a plurality or pilot bores including preferably two to four pilot bores. Optionally, a diameter of the pilot bores is less than a diameter of the bolt bores.

Optionally, the ring comprises an external facing surface that is divided axially to have a first axial section having a first outside diameter and a second axial section having a second outside diameter that is greater than the outside diameter of the first section. The ring may comprise a tapered shoulder at the external facing surface at the axial junction between the first and second axial sections. Preferably, the shoulder comprises an annular surface aligned transverse to the external facing surface of the ring at the first and second axial sections with the surfaces at these sections being aligned parallel to a longitudinal axis extending through the bearing cartridge, the main shaft and a rotor of the VSI crusher.

Preferably, the outside diameter of the second axial section is in a range +/- 1 to 2 mm of the internal diameter of the skirt. That is, and preferably the outside diameter of the second section is approximately equal to an inside diameter of an inward facing surface of the skirt such that the ring is securable within the skirt by interference friction fit. Accordingly, the present retaining ring may be inserted and is capable of being held exclusively radially between the housing and the skirt via the frictional contact between the ring and the housing and the skirt. Such a configuration is advantageous to facilitate installation of the retaining ring into the skirt from within the confined space at the lower region of the crusher frame.

Preferably, the ring is a split ring having a discontinuation or break in a circumferential direction around the ring to enable the ring to be expanded radially. Such an arrangement is advantageous to temporarily expand the ring radially by inserting a tool into the region of the split to allow the ring to be slid over a bottom cover of the bearing cartridge and into position about the housing. Additionally, this configuration also facilitates removal of the ring once the retaining bolts have been removed.

Optionally, the ring comprises a non-ferrous metal. Optionally, the ring comprises an aluminium or aluminium alloy. Optionally, the ring may comprise a thermoplastic material, a polymer material or a polyamide based material. Preferably, the ring comprises a nylon.

A nylon ring is advantageous to provide a desired preloading force when compressed to locate radially between the housing and the skirt. A polymer based material will avoid seizing of the ring to the housing of the surrounding drum which is a problem with conventional designs. Additionally, a polymeric material is incapable of being compressed radially onto the outside surface of the housing to an extent that would distort the metal housing radially inward and reduce the running clearance of the bearings. A polymer based retaining ring is further advantageous to withstand high operating temperatures encountered during use and to minimise or eliminate expansion and heat transfer problems.

Optionally, the retaining ring is self-lubricating and does not require grease or oil. A polymeric retaining ring is accordingly lighter than conventional arrangements to contribute to a reduction in the overall weight of the crusher being a general objective of the present invention. The present ring is further advantageous by the choice of material to be retained radially between the housing and the skirt of the frame drum by a friction interference fit. This friction fit is achieved via the desired deformable characteristic of the ring when pushed axially into a pocket region defined between the housing and the skirt. Such an arrangement greatly facilitates mounting and disassembly of the bearing cartridge at the crusher particularly given the confined space available to personnel when fitting and removing the bearing cartridge via sets of bolts.

According to a second aspect of the present invention there is provided a vertical shaft impact crusher comprising a bearing cartridge as described and claimed herein.

Optionally, the crusher comprises a mainframe, the mainframe including the annular neck and the annular skirt, the frame further comprising a drum connecting axially the neck and the skirt, wherein the housing extends within the drum axially between the neck and the skirt. Preferably, the mainframe further comprises wings projecting radially outward from the drum and extending axially between the annular neck and skirt. Optionally, the crusher comprises four axially and radially extending wings. Preferably, the rings project radially outward beyond the drum by a distance greater than that by which the annular neck and skirt project radially from the drum.

Preferably, the ring is mounted substantially at the same axial position as a bearing assembly located radially between the housing and the main shaft of the crusher. Accordingly, and preferably the bearing cartridge is mounted at the drum at an upper axial end and a lower axial end of the cartridge and in particular the cartridge housing. Such arrangement facilitates the secure mounting and stabilisation of the cartridge within the frame to eliminate lateral movement and reduce or eliminate the transmission of vibrational forces.

The present retaining ring formed from a thermoplastic polymer material is advantageous to reduce and preferably eliminate transmission of vibrational forces from the cartridge to the crusher mainframe (and in particular the annular skirt). Accordingly, the present ring may be considered to provide absorption of vibrational forces and to provide a relatively flexible mounting gasket between the cartridge and the mainframe relative to conventional steel retaining ring arrangements.

### Brief description of drawings

A specific implementation of the present invention will now be described, by way of example only, and with reference to the accompanying drawings in which:
Figure 1 is an external perspective view of part of a bearing cartridge to support a main shaft within a vertical shaft impact (VSI) crusher according to a specific implementation of the present invention;
Figure 2 is a cross sectional perspective view of the bearing cartridge of figure 1;
Figure 3 is an external perspective view of the bearing cartridge of figure 2;
Figure 4 is an elevated perspective view of a retaining ring to support the mounting of the bearing cartridge of figure 3 at a frame part of a VSI crusher according to the specific implementation of the present invention;
Figure 5 is an external perspective side view of the retaining ring of figure 4;
Figure 6 is a magnified cross sectional perspective view of a lower region of the bearing cartridge of figure 2.

### Detailed description of preferred embodiment of the invention

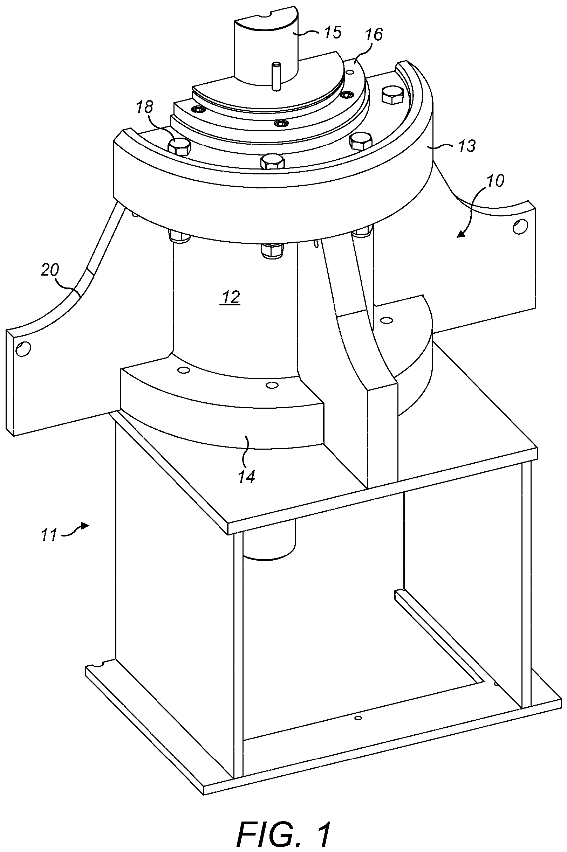

Referring to figures 1 to 3, a vertical shaft impact (VSI) crusher comprises a main shaft 15 that supports a rotor (not shown) mounted within a crushing chamber and surrounded by a retained and compacted bed of material or crushing anvils (not shown). Material to be crushed is fed vertically downward onto the rotor (rotating at high speed) that propels radially outward the feed material onto the compacted bed of material where it is crushed and discharged from the crusher. Main shaft 15 is aligned generally vertically on a central axis 17. The rotational mounting of main shaft 15 is provided by a bearing cartridge, indicated generally by reference 10 positioned at a lower region of the VSI crusher. The cartridge 10 encapsulates a majority of the length of the main shaft 15 and is in turn mounted at a mainframe 11 of the crusher. In particular, the mainframe 11 may be considered to comprise a support drum indicated generally by reference 12 centred on axis 17 and having an axially upper annular neck 13 and an axially lower annular skirt 14 provided at respective axial ends of drum 12. Bearing cartridge 10 is mounted internally to sit within drum 12 (and neck 13 and skirt 14). Drum 12 is stabilised at mainframe 11 via four wings 20 that extend axially along drum 12 from neck 13 to skirt 14. Each wing 20 also projects radially outward from drum 12 so as to provide a set of radially projecting spokes that maintain drum 12 and bearing cartridge 10 in a rotationally locked position at mainframe 11 so as to fully support and stabilise the rotational movement of main shaft 15 about axis 17. Internal components of the bearing cartridge 10 are sealed within the cartridge 10 by a first end cap 16 positioned at an upper axial end of cartridge 10 and a corresponding second end cap 34 positioned at an opposed second axially lower end of the bearing cartridge 10. Cartridge 10 is secured to mainframe 11 via specific attachment to annular neck 13 via a set of attachment bolts 18. A corresponding set of attachment bolts 33 secure the mounted position of bearing cartridge 10 at the lower annular skirt 14.

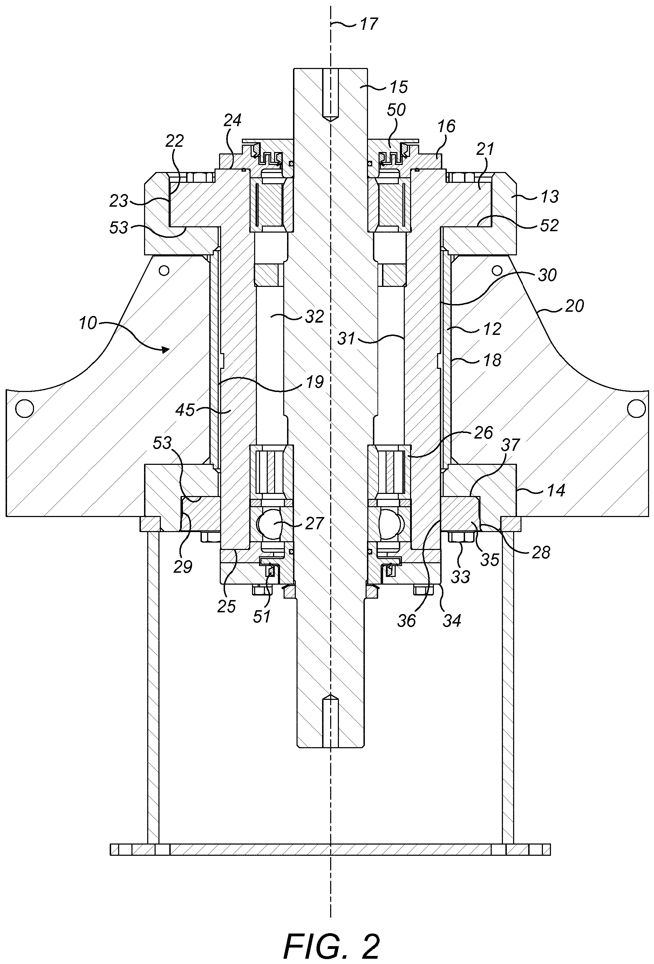

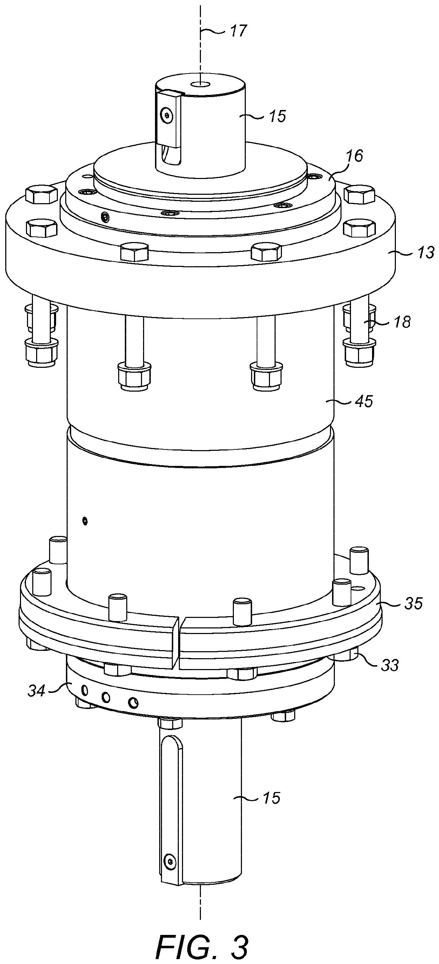

Referring to figures 2 and 3, cartridge 10 comprises an elongate cylindrical housing 45 having a radially external facing surface 30 and a radially internal facing surface 31. Housing 45 comprises an axial upper first end 24 (positioned approximately at annular neck 13) and an axial lower second end 25 (positioned approximately at annular skirt 14). An internal chamber 32 is defined by housing internal facing surface 31 with chamber 32 extending axially between the first and second ends 24, 25. An annular flange 21 projects radially outward from housing 45 at (or immediately inward) of the first axial end 24. Flange 21 projects radially outward from housing 45 approximately by a distance greater than a radial thickness of housing 45 along the majority of its axial length between ends 24, 25. Flange 21 comprises a radially outward facing surface 23. Annular neck represents an increased diameter section of housing 45 and is also generally cylindrical to define an internal cylindrical pocket having an annular radially inward facing surface 23 and an annular base surface 52. The inward facing surface 22 is aligned parallel to housing inward facing surface 31 and axis 17 whilst base surface 52 is aligned perpendicular to surfaces 22, 31 and axis 17. Flange 21 comprises a corresponding annular radially outward facing surface 23 having an outside diameter and shape profile corresponding and complementary to that of the inward facing surface 22 of neck 13. Flange 21 also comprises a downward facing annular end surface 53 to mate in abutted contact with the base surface 52 of neck 13. Accordingly, housing 45 is capable of being seated and mounted at mainframe 11 (and drum 12) via abutment contact between flange surfaces 23 and 53 with neck surfaces 22 and 52, respectively. Housing 45 is axially and rotationally locked at drum 12 and crusher mainframe 11 via attachment bolts 18 that extend through flange 21 and annular neck 13. Internal chamber 32 is sealed at its axial upper end by a set of labyrinth seals 50 defined by end cap 16. Similarly, internal chamber 32 is sealed at its axially lower end via a corresponding set of labyrinth seals 51 defined by lower end cap 34. A main length of housing 45, extending axially between neck 13 and skirt 14, is positioned in near touching contact with a radially inward facing surface 19 of drum 12. Due to this small clearance, housing 45 is capable of being inserted and extracted axially within drum 12 once bolts 18 have been released from their clamping position at annular neck 13. Wings 20 project radially outward and in contact with drum external facing surface 30 with respective upper and lower regions of each wing 20 placed in abutment contact with neck 13 and skirt 14.

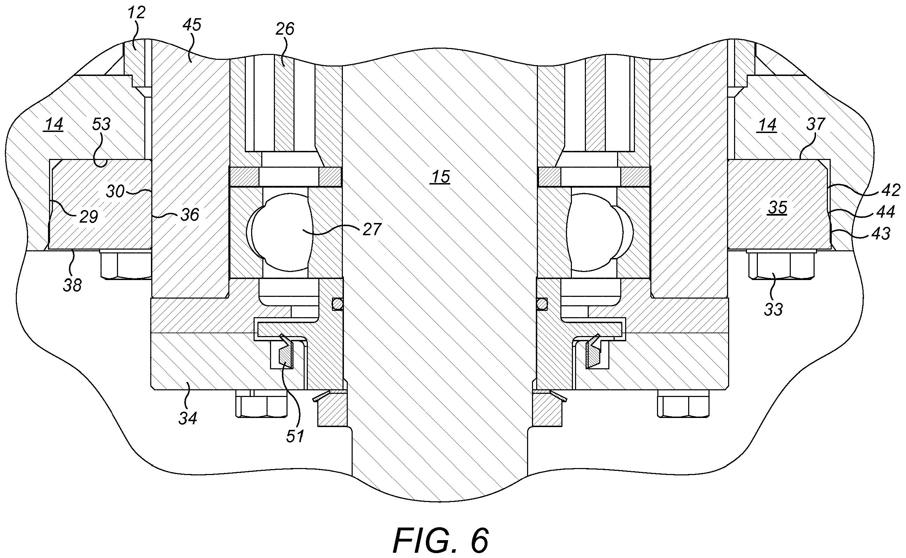

Referring to figures 2 and 6, the axial and radial mounting of bearing cartridge 10 at drum 12 and mainframe 11 is further provided by a retaining ring 35 positioned to sit radially between skirt 14 and housing 45. Annular skirt 14 comprises a very similar shape and configuration to annular neck 13 and is formed as a larger diameter axial extension of the main length of drum 12. In particular, annular skirt 14 comprises an annular radially inward facing surface 29 extending parallel to axis 17 and a corresponding end surface 53 aligned perpendicular to surface 29 and axis 17. The right angle surfaces 29, 53 define an annular pocket between skirt 14 and an axially lower region of housing 45 immediately inward of housing lower end 25. Retaining ring 35 is accommodated within the pocket of skirt 14 and in abutment contact with the radially outward facing surface 30 of housing 45, the radially inward facing surface 29 and end surface 53 of skirt 14. Retaining ring 35 is secured axially and is radially locked at skirt 14 via a set of attachment bolts 33 extending axially through ring 35 and skirt 14. Ring 35 comprises a radially outward facing surface indicated generally by reference 28 configured to abut in close fitting frictional fit against the skirt inward facing surface 29. Ring 35 further comprises a first annular end face 37 configured to abut skirt end surface 53. Ring 35 further comprises a radially inward facing annular surface 36 configured to abut (in close frictional fit) the housing radially outward facing surface 30. Accordingly, ring 35 is dimensioned to sit completely within the pocket defined axially and radially between skirt 14 and housing 45.

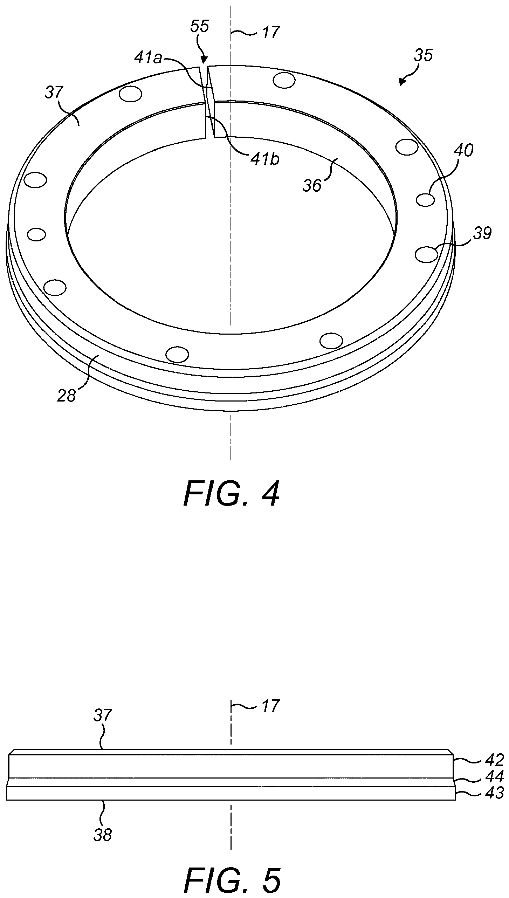

Referring to figures 4 and 5, ring 35 is formed as a single piece component in which ring 35 comprises a single body that extends continuously radially between skirt inward facing surface 29 and housing external facing surface 30. That is, the body of ring 35 is continuous and unbroken between its radially outward facing surface 28 and its radially inward facing surface 36. According to the specific implementation, the outward and inward facing surfaces 28, 36 are parallel to one another. Faces 36, 38 are terminated at respective upper and lower ends by respective end faces 37, 38 with face 37 being upward facing and face 38 being downward facing when ring 35 is mounted in position radially between skirt 14 and housing 45. Eight bore holes 39 extend axially through ring 35 between end faces 37, 38 to receive attachment bolts 33. Bore holes 39 are distributed uniformly in a circumferential direction around axis 17. Ring 35 further comprises a pair of pilot bores 40 positioned in a circumferential direction between a pair of neighbouring bore holes 39. Pilot bores 40 comprise a respective smaller diameter to the main bore holes 39 and are configured to receive release or pilot pins, screws or bolts that may be axially advanced into retaining ring 35 once the primary bolts 33 are withdrawn so as to abut onto skirt end surface 53 and facilitate axial extraction of ring 35 from between the skirt 14 and housing 45.

The single body of ring 35 is broken or discontinuous in a circumferential direction such that ring 35 may be considered to be a split ring having a first end 41a and a second end 41b in a circumferential direction. The respective first and second ends 41a, 41b are positioned opposed to one another to define a gap region 55. Such a configuration is advantageous to facilitate installation of ring 35 into the pocket between skirt 14 and housing 45. In particular, a suitable tool (e.g., a screwdriver) may be inserted into gap region 55 so as to '*spread*' ring 35 slightly to allow it to pass axially over end plate 34 at to slide axially over housing 45 into position within the skirt pocket.

Ring radially outward facing surface 28 is divided into a first axial upper section 42 and a second axial lower section 43. Each section 42, 43 is separated axially by a shoulder transition section 44. First section 42 comprises a first outside diameter (OD) and second section 43 comprises a second OD being greater than that of the first section 42. Accordingly, transition section 44 is formed as a shoulder that provides a tapering OD transition from the smaller OD of first section 42 to the larger OD of second section 43. The dual OD configuration of ring 35 facilitates insertion of the ring 35 into the pocket between skirt 14 and housing 45 whilst also facilitating an axial and radial secure fit of ring 35 between cartridge 10 and drum 12. Such a configuration is advantageous during initial assembly and final disassembly procedures as ring 35 once introduced into internal region of skirt 14 is self-retaining at drum 12 so as to greatly facilitate manual introduction and tightening of bolts 33 within the confined space at the lower region the VSI crusher. According to the specific implementation, an axial length of first axial section 42 is greater than that of second axial section 43 such that a majority of the axial length of ring 35 between faces 37 and 38 may be introduced into the internal region of skirt 14 before second section 43 is forced into abutment contact against skirt inward facing surface 29 to frictionally hold ring 35 about housing 45. Advantageously, ring 35 is formed from a thermoplastic polymer material having an appropriate hardness and plasticity (malleability) to greatly facilitate installation, extraction and the axial and radial support of bearing cartridge 10 at drum 12. In particular, and according to the specific implementation, ring 35 comprises a nylon material having a Shore D hardness (at 22 °C) in a range 70 to 90 according to International Standard ASTM D2240. Additionally, ring 35 may comprise a compressive strength (10% deformation, 22 °C) of 80 to 90 MPa according to ASTM D695. A thermoplastic material is advantageous to withstand higher operating temperatures as housing 45 is heated by the frictional contact of the internal bearings 26, 27 mounted within chamber 32. Additionally, ring 35 exhibits minimal expansion and thermal transfer between housing 45 and mainframe 11. The deformation characteristic of ring 35 is further beneficial to absorb the vibrational forces received from housing 45 due to the rotational motion of main shaft 15 and bearings 26, 27. The material choice of ring 35 is further advantageous to avoid seizing within the skirt 14 and at the external surface 30 of housing 45.

By forming ring 35 as a single piece body to bridge completely the pocket between skirt surface 29 and housing surface 30, ring 35 eliminates the risk and occurrence of the ring unintentionally compressing radially onto housing external facing surface 30 which may otherwise act to radially compress the region of housing 45 at the axial position of skirt 14 and reduce the running clearance of bearings 26 and 27. As will be appreciated, bearings 26 and 27 typically comprise thrust and roller bearings which require a predetermined radial clearance between main shaft 15 and housing internal facing surface 31. Whilst ring 35 is capable of being clamped axially to skirt 14, it is configured to expand radially to only a small extent sufficient to achieve a frictional lock against housing external facing surface 30 and skirt internal facing surface 29 as bolts 33 are tightened.

Advantageously, the present bearing cartridge 10 is axially and rotationally locked at drum 12 exclusively via flange 21 and annular neck 13. That is, ring 35 whilst being radially locked at annular skirt 14 is incapable of being rotationally coupled/locked at the external facing surface 30 of housing 45. In particular, ring 35 is independently rotationally mounted at housing 45. That is, ring 35 advantageously provides support and stabilisation of housing 45 within drum 12 to prevent lateral (radial) movement of housing 45 at its lower end 25 relative to drum 12. Effectively, bearing cartridge 10 is suspended axially from and rotationally locked to drum 12 exclusively via the seating and clamping of flange 21 at neck 13.

## Claims

1. A bearing cartridge (10) to support a rotatable main shaft (15) of a vertical shaft impact (VSI) crusher, the cartridge (10) comprising:
an elongate housing (45) defining an internal chamber (32) to receive a part of the main shaft (15) of the crusher;
an annular flange (21) projecting radially outward from the housing (45) at or towards a first axial end (24) of the housing (45) to seat within an annular neck (13) of a frame part (11) of the crusher; and
a retaining ring (35) releasably mountable to an external facing surface (30) of the housing (45) at or towards a second axial end (35) of the housing (45) to seat within an annular skirt (14) of the frame part (11);
**characterised in that**:
the retaining ring (35) is a single piece ring extending radially between the skirt (14) and the housing (45).

2. The cartridge as claimed in claim 1 wherein an external facing surface (28) of the ring (35) is in contact with a radially inward facing surface (29) of the skirt (14) and a radially inward facing surface (36) of the ring (35) is in contact with the external facing surface (30) of the housing (45) such that the ring (35) extends completely between the skirt (14) and the housing (45).

3. The cartridge as claimed in claims 1 or 2 further comprising bolt bores (39) extending axially through the ring (35) to receive bolts (33) to releasably secure the ring (35) to the skirt (14).

4. The cartridge as claimed in claim 3 further comprising at least one axially extending pilot bore (40) being separate to the bolt bores (39) to receive axially a release screw or bolt.

5. The cartridge as claimed in any preceding claim wherein the ring (35) comprises an external facing surface (28) that is divided axially to have a first axial section (42) having a first outside diameter and a second axial section (43) having a second outside diameter that is greater than the outside diameter of the first section (42).

6. The cartridge as claimed in claim 5 wherein the outside diameter of the second section (43) is approximately equal to an inside diameter of an inward facing surface (29) of the skirt (14) such that the ring (35) is securable within the skirt (14) by interference friction fit.

7. The cartridge as claimed in any preceding claim wherein the ring (35) is a split ring having a discontinuation or break in a circumferential direction around the ring to enable the ring (35) to be expanded radially.

8. The cartridge as claimed in the preceding claims 1-6 wherein the ring (35) is not split or divided in a radial direction.

9. The cartridge as claimed in any preceding claim wherein the ring (35) comprises a non-ferrous metal.

10. A vertical shaft impact (VSI) crusher comprising a bearing cartridge (10) as claimed in any preceding claim.

11. The crusher as claimed in claim 10 comprising a mainframe (11), the mainframe (11) including the annular neck (13) and the annular skirt (14), the mainframe (11) further comprising a drum (12) connecting axially the neck (13) and the skirt (14), wherein the housing (45) extends within the drum (12) axially between the neck (13) and the skirt (14).

12. The crusher as claimed in claims 10 or 11 wherein the ring (35) is mounted substantially at the same axial position as a bearing assembly (26, 27) located radially between the housing (45) and the main shaft (15) of the crusher.

## Patentansprüche

1. Lagerhülse (10) zum Lagern einer rotierbaren Hauptwelle (15) eines Prallbrechers mit vertikaler Welle (VSI), wobei die Hülse (10) Folgendes aufweist:
ein längliches Gehäuse (45), das eine innere Kammer (32) zum Aufnehmen eines Teils der Hauptwelle (15) des Brechers definiert,
einen ringförmigen Flansch (21), der an einem ersten axialen Ende (24) oder in der Richtung eines ersten axialen Endes (24) des Gehäuses (45) in radialer Richtung von dem Gehäuse (45) nach außen vorspringt, um in einem ringförmigen Hals (13) eines Rahmenteils (11) des Brechers zu sitzen, und
einen Haltering (35), der an einem zweiten axialen Ende (35) oder in der Richtung eines zweiten axialen Endes (35) des Gehäuses (45) an einer nach außen weisenden Oberfläche (30) des Gehäuses (45) lösbar montierbar ist, um in einer ringförmigen Einfassung (14) des Rahmenteils (11) zu sitzen,
**dadurch gekennzeichnet, dass**
der Haltering (35) ein Ring aus einem Stück ist, der sich radial zwischen der Einfassung (14) und dem Gehäuse (45) erstreckt.

2. Hülse nach Anspruch 1, wobei eine nach außen weisende Oberfläche (28) des Rings (35) in Kontakt mit einer radial nach innen weisenden Oberfläche (29) der Einfassung (14) ist und eine radial nach innen weisende Oberfläche (36) des Rings (35) in Kontakt mit der nach außen weisenden Oberfläche (30) des Gehäuses (45) ist, sodass der Ring (35) sich vollständig zwischen der Einfassung (14) und dem Gehäuse (45) erstreckt.

3. Hülse nach Anspruch 1 oder 2, die des Weiteren Bolzenlöcher (39) aufweist, die sich axial durch den Ring (35) erstrecken, um Bolzen (33) aufzunehmen, um den Ring (35) an der Einfassung (14) lösbar zu sichern.

4. Hülse nach Anspruch 3, welche weiterhin wenigstens ein sich axial erstreckendes Führungsloch (40) aufweist, welches separat von den Bolzenlöchern (39) ist, um eine Ablass- bzw. Loslösschraube oder einen Bolzen axial aufzunehmen.

5. Hülse nach einem der vorangehenden Ansprüche, wobei der Ring (35) eine nach außen weisende Oberfläche (28) aufweist, die axial unterteilt ist, wodurch sich ein erster axialer Bereich (42) mit einem ersten äußeren Durchmesser ergibt und ein zweiter axialer Bereich (43), der einen zweiten äußeren Durchmesser aufweist, der größer ist als der äußere Durchmesser des ersten Bereichs (42).

6. Hülse nach Anspruch 5, wobei der äußere Durchmesser des zweiten Bereichs (43) ungefähr gleich einem inneren Durchmesser einer nach innen weisenden Oberfläche (29) der Einfassung (14) ist, sodass der Ring (35) in der Einfassung (14) durch Presspassung sicherbar ist.

7. Hülse nach einem der vorangehenden Ansprüche, wobei der Ring (35) ein Ring mit einem Spalt ist, wobei der Ringb in einer umlaufenden Richtung entlang des Rings eine Diskontinuität oder eine Lücke aufweist, um es zu ermöglichen, dass der Ring (35) radial expandiert wird.

8. Hülse nach einem der Ansprüche 1 bis 6, wobei der Ring (35) in einer radialen Richtung nicht gespalten oder geteilt ist.

9. Hülse nach einem der vorangehenden Ansprüche, wobei der Ring (35) ein eisenfreies Metall aufweist.

10. Prallbrecher mit einer vertikalen Welle (VSI) mit einer Lagerhülse (10) nach einem der vorangehenden Ansprüche.

11. Brecher nach Anspruch 10 mit einem Hauptrahmen (11), wobei der Hauptrahmen (11) einen ringförmigen Hals (13) und eine ringförmige Einfassung (14) aufweist, wobei der Hauptrahmen (11) weiterhin eine Trommel (12) aufweist, die den Hals (13) und die Einfassung (14) axial verbindet, wobei das Gehäuse (45) sich innerhalb der Trommel (12) axial zwischen dem Hals (13) und der Einfassung (14) erstreckt.

12. Brecher nach einem der Ansprüche 10 oder 11, wobei der Ring (35) im Wesentlichen in der gleichen axialen Position montiert ist wie eine Lageranordnung (26, 27), die radial zwischen dem Gehäuse (45) und der Hauptwelle (15) des Brechers angeordnet ist.

## Revendications

1. Cartouche de palier (10) pour supporter un arbre principal rotatif (15) d'un concasseur à impact à arbre vertical (VSI), la cartouche (10) comprenant :
un logement allongé (45) qui définit une chambre interne (32) pour recevoir une partie de l'arbre principal (15) du concasseur ;
une bride annulaire (21) qui fait saillie radialement vers l'extérieur par rapport au logement (45) au niveau d'une première extrémité axiale (24) du logement (45) ou en direction de cette même première extrémité axiale de telle sorte qu'elle réalise en effet d'assise à l'intérieur d'une collerette annulaire (13) d'une partie de structure (11) du concasseur ; et
une bague de retenue (35) qui peut être montée de façon libérable sur une surface en regard externe (30) du logement (45) au niveau d'une seconde extrémité axiale (35) du logement (45) ou en direction de cette même seconde extrémité axiale de telle sorte qu'elle réalise en effet d'assise à l'intérieur d'une jupe annulaire (14) de la partie de structure (11) ;
**caractérisée en ce que** :
la bague de retenue (35) est une bague mono-pièce qui s'étend radialement entre la jupe (14) et le logement (45).

2. Cartouche telle que revendiquée selon la revendication 1, dans laquelle une surface en regard externe (28) de la bague (35) est en contact avec une surface en regard radialement interne (29) de la jupe (14) et une surface en regard radialement interne (36) de la bague (35) est en contact avec la surface en regard externe (30) du logement (45) de telle sorte que la bague (35) s'étende complètement entre la jupe (14) et le logement (45).

3. Cartouche telle que revendiquée selon la revendication 1 ou 2, comprenant en outre des alésages de boulon (39) qui s'étendent axialement au travers de la bague (35) pour recevoir des boulons (33) afin de fixer de façon ferme, sécurisée et libérable la bague (35) sur la jupe (14).

4. Cartouche telle que revendiquée selon la revendication 3, comprenant en outre au moins un alésage pilote s'étendant axialement (40) qui est séparé des alésages de boulon (39) pour recevoir axialement une vis ou un boulon de libération.

5. Cartouche telle que revendiquée selon l'une quelconque des revendications précédentes, dans laquelle la bague (35) comprend une surface en regard externe (28) qui est divisée axialement de telle sorte qu'elle comporte une première section axiale (42) qui présente un premier diamètre externe et une seconde section axiale (43) qui présente un second diamètre externe qui est plus grand que le diamètre externe de la première section (42).

6. Cartouche telle que revendiquée selon la revendication 5, dans laquelle le diamètre externe de la seconde section (43) est approximativement égal à un diamètre interne d'une surface en regard interne (29) de la jupe (14) de telle sorte que la bague (35) puisse être fixée de façon ferme et sécurisée à l'intérieur de la jupe (14) au moyen d'un ajustement par friction et serrage.

7. Cartouche telle que revendiquée selon l'une quelconque des revendications précédentes, dans laquelle la bague (35) est une bague fendue qui présente une discontinuité ou une rupture dans une direction circonférentielle autour de la bague pour permettre la dilatation radiale de la bague (35).

8. Cartouche telle que revendiquée selon les revendications précédentes 1 à 6, dans laquelle la bague (35) n'est ni fendue, ni divisée dans une direction radiale.

9. Cartouche telle que revendiquée selon l'une quelconque des revendications précédentes, dans laquelle la bague (35) comprend un métal non ferreux.

10. Concasseur à impact à arbre vertical (VSI) comprenant une cartouche de palier (10) telle que revendiquée selon l'une quelconque des revendications précédentes.

11. Concasseur tel que revendiqué selon la revendication 10, comprenant une structure principale (11), la structure principale (11) incluant la collerette annulaire (13) et la jupe annulaire (14), la structure principale (11) comprenant en outre un tambour (12) qui connecte axialement la collerette (13) et la jupe (14), dans lequel le logement (45) s'étend à l'intérieur du tambour (12) axialement entre la collerette (13) et la jupe (14).

12. Concasseur tel que revendiqué selon la revendication 10 ou 11, dans lequel la bague (35) est montée sensiblement à la même position axiale qu'un assemblage de palier(s) (26, 27) qui est localisé radialement entre le logement (45) et l'arbre principal (15) du concasseur.
